(19) Europäisches Patentamt
European Patent Office
Office européen des brevets

(11) EP 0 749 257 B1

(12) **FASCICULE DE BREVET EUROPEEN**

(45) Date de publication et mention
de la délivrance du brevet:
**28.04.2004 Bulletin 2004/18**

(51) Int Cl.⁷: **H04Q 11/00**, H04L 12/56

(21) Numéro de dépôt: **96401261.1**

(22) Date de dépôt: **11.06.1996**

(54) **Matrice de commutation, de grande capacité**

Schaltmatrix mit hoher Kapazität

High capacity switching matrix

(84) Etats contractants désignés:
**BE CH DE ES GB IT LI NL SE**

(30) Priorité: **14.06.1995 FR 9507070**

(43) Date de publication de la demande:
**18.12.1996 Bulletin 1996/51**

(73) Titulaire: **ALCATEL**
**75008 Paris (FR)**

(72) Inventeurs:
• **Dieudonne, Marc**
**91430 Igny (FR)**
• **Perrier, Philippe**
**78140 Velizy Villacoublay (FR)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(56) Documents cités:
**EP-A- 0 494 831**

• **COMPUTER COMMUNICATIONS, vol. 15, no. 3,**
**Avril 1992, GUILDFORD GB, pages 143-152,**
**XP000249955 R GIDRON: "TeraNet: a**
**multi-gigabits per second ATM network"**

## Description

L'invention concerne une matrice de commutation, notamment pour des cellules à mode de transfert asynchrone, ayant une grande capacité. La première génération de matrice de commutation à mode de transfert asynchrone présente une faible capacité, typiquement 128 x 128 à 512 x 512 accès à 155 Mbits/s. La prochaine génération de matrice devra présenter une plus grande capacité, par exemple 4000 x 4000 accès à 155 Mbits/s, voir 512 x 512 accès à 2,5 Gbits/s. Actuellement le nombre d'accès d'une matrice, pour un débit donné, est limité par des problèmes technologiques. Un recours consiste à réaliser un réseau de plusieurs matrices, qui est équivalent à une matrice de plus grande capacité tout au moins en ce qui concerne le nombre d'accès. Un tel réseau comporte en général plusieurs étages, chaque étage comportant une ou plusieurs matrices ayant un nombre d'accès plus petit que le nombre d'accès de l'ensemble du réseau. Cette solution a pour inconvénients : une multiplication des moyens de commande, parce qu'il en faut pour chaque étage; une multiplication des délais de propagation, parce que chaque étage introduit un délai supplémentaire; et une multiplication de la puissance dissipée, puisqu'il y a de nombreuses matrices dans un tel réseau.

Une structure fonctionnelle classique de matrice à mode de transfert asynchrone, ayant N entrées et N sorties, comporte N modules fonctionnels d'entrée, un réseau de diffusion, et N modules fonctionnels de sortie, chaque module fonctionnel de sortie comportant une mémoire tampon pour mettre en file d'attente des cellules qui sont destinées à une même sortie mais qui ne peuvent pas être émises sur cette sortie à un même instant. Selon une variante de réalisation, l'ensemble des sorties est décomposé en plusieurs sous-ensembles, et il y a une mémoire tampon par sous-ensemble de sorties. Pour la réalisation, une même carte peut regrouper plusieurs modules fonctionnels d'entrée, et une même carte peut regrouper plusieurs modules fonctionnels de sortie.

Une matrice de commutation doit permettre, par définition, d'acheminer une cellule de n'importe quelle entrée de cette matrice vers n'importe quelle sortie de cette matrice. Pour celà, chacun des N modules fonctionnels d'entrée comporte N sorties, et chacune de ces sorties est reliée par le réseau de diffusion à chacun des N modules fonctionnels de sortie. Le réseau de diffusion doit donc assurer simultanément $N^2$ liaisons entre les modules fonctionnels d'entrée et les modules fonctionnels de sortie. En général, ces modules fonctionnels d'entrée et les modules fonctionnels de sortie ne sont pas situés sur une même carte, mais sur plusieurs cartes. Les $N^2$ liaisons passent par un fond de panier supportant ces cartes.

En l'état actuel de la technologie, les modules fonctionnels d'entrée et les modules fonctionnels de sortie sont réalisés en technologie électronique et les bits constituant chaque cellule ne sont pas transmis en série, mais sont transmis en parallèle, typiquement par groupe de huit ou de seize, afin de diviser le rythme de transmission, respectivement par huit ou par seize. Dans le cas d'une matrice à 128 x 128 accès, le nombre de liaisons entre les modules fonctionnels d'entrée et les modules fonctionnels de sortie doit donc être de $128^2$ = 16 384 sans modification du rythme, ou bien huit ou seize fois plus élevé s'il y a une modification du rythme de transmission. Il faudrait donc réaliser un fond de panier supportant ce nombre très élevé de liaisons. La technologie des fonds de panier en circuit imprimé ne permet pas de réaliser un nombre aussi élevé de liaisons.

On sait par ailleurs réaliser un fond de panier permettant des liaisons à un rythme beaucoup plus élevé que les fonds de panier classiques, grâce à l'emploi de guides d'onde optique. L'article: A PHOTONIC BACKPLANE FOR A HIGH CAPACITY TIME SWITCH by D.A. Kahn et al, International Switching Symposium 1987, décrit un tel fond de panier. Chaque bus est constitué d'un guide d'onde optique comportant des coupleurs munis de connecteurs optiques pour les cartes supportant des circuits électroniques. Chaque bus peut ainsi transmettre des données à un rythme de plusieurs Gbits/s. Il n'est donc pas nécessaire de mettre en parallèle huit ou seize liaisons pour obtenir un rythme de transmission élevé. Cet article décrit aussi une structure de matrice de commutation à mode de transfert asynchrone, comportant 16 x 16 accès. Cette matrice est décomposée en seize sous-ensembles correspondant chacun à une colonne de la matrice, chaque sous-ensemble étant équivalent à seize commutateurs qui seraient situés aux points de croisement constituant une colonne de la matrice. La matrice comporte seize bus verticaux et seize bus horizontaux. Chaque sous-ensemble comporte un bus optique vertical. Les bus optiques sont chacun équivalent à un réseau local à très haute capacité mettant en oeuvre un protocole d'accès à répartition dans le temps. Cette structure à l'avantage de résoudre le problème du nombre des liaisons, et de leur capacité, et permet donc d'augmenter le nombre d'accès d'une matrice. Cependant ce type de bus est complexe à mettre en oeuvre, puisqu'il faut utiliser un protocole d'accès du type réseau local.

L'article : AN OPTICAL BACKPLANE FOR HIGH PERFORMANCE SWITCHES by G.J. GRIMES et al, International Switching symposium 1990, décrit l'utilisation d'un fond de panier à bus optique pour réaliser des interconnexions entre des modules fonctionnels électroniques dans un équipement de commutation. Ces modules fonctionnels sont simplement reliés en parallèle sur les bus, mais utilisent un protocole d'accès à répartition dans le temps.

Il est donc connu de simplifier des fonds de panier dans un équipement de commutation en utilisant des bus optiques à haut débit. Cependant les solutions proposées mettent en oeuvre des protocoles d'accès qui compliquent fortement la mise en oeuvre des liaisons.

Le but de l'invention est de proposer une structure de matrice de commutation, notamment pour des cellules à mode de transfert asynchrone, dont la capacité soit très améliorée par rapport à ce que permettent des liaisons électriques classiques, sans que la mise en oeuvre des liaisons soit complexe.

L'objet de l'invention est une matrice de commutation, comportant :

- N modules fonctionnels d'entrée ayant chacun une entrée et N sorties;
- N modules fonctionnels de sortie ayant chacun N entrées et une sortie;
- un réseau de diffusion ayant $N^2$ entrées reliées aux $N^2$ sorties des modules fonctionnels d'entrée, et $N^2$ sorties reliées au $N^2$ entrées des modules fonctionnels de sortie, pour diffuser simultanément N signaux fournis par chaque module fonctionnel d'entrée vers chaque module fonctionnel de sortie;

    caractérisé en ce que le réseau de diffusion comporte :

- N sous-ensembles d'émission chacun comportant des moyens pour émettre N porteuses optiques ayant des longueurs d'onde distinctes $\lambda_i$ avec i=1, ..., N, modulées respectivement par N signaux fournis par un module fonctionnel d'entrée;
- N sous-ensembles de réception, chacun comportant des moyens pour recevoir N porteuses optiques ayant respectivement ces N longeurs d'onde; extraire N signaux, modulant respectivement ces porteuses; et les fournir à un module fonctionnel de sortie;
- N bus optiques chacun étant couplé respectivement à une entrée d'un sous-ensemble de réception et étant couplé respectivement à chacun des sous-ensembles d'émission de telle sorte que le j-ième bus, pour j=1 à N, reçoit du k-ième sous-ensemble d'émission les porteuses ayant les longueurs d'onde :

$$\lambda_{1-k(modulo\ N)}, ..., \lambda_{N-k(modulo\ N)}.$$

La matrice ainsi caractérisée permet de simplifier la réalisation puisqu'il suffit de N liaisons optiques à multiplexage spectral, au lieu de $N^2$ liaisons électriques sans modification de rythme. La technologie actuelle permet de réaliser des émetteurs optiques travaillant sur seize longueurs d'onde distinctes et fixes, et de réaliser des démultiplexeurs optiques séparant ces seize longueurs d'onde fixes. Il est donc possible de réaliser ainsi une matrice optique à 16 x 16 accès. Dans ce cas, le fond de panier comporte seulement seize bus optiques, au lieu de :

- $16^2$=256 bus électriques, dans l'hypothèse où il n'y aurait pas de changement de rythme (155 Mbits/s);
- $16^2$ x 8 = 2048 bus électriques, dans l'hypothèse où le rythme de transmission (1,24 Gbits/s) serait réduit dans un rapport 8 pour les liaisons électriques;
- $16^2$ x 16 = 4096 bus électriques, dans l'hypothèse où le rythme de transmissioin (5 Gbits/s) serait réduit dans un rapport 16 pour les liaisons électriques.

L'invention sera mieux comprise et d'autres caractéristiques apparaîtront à l'aide de la description ci-dessous et des figures l'accompagnant :

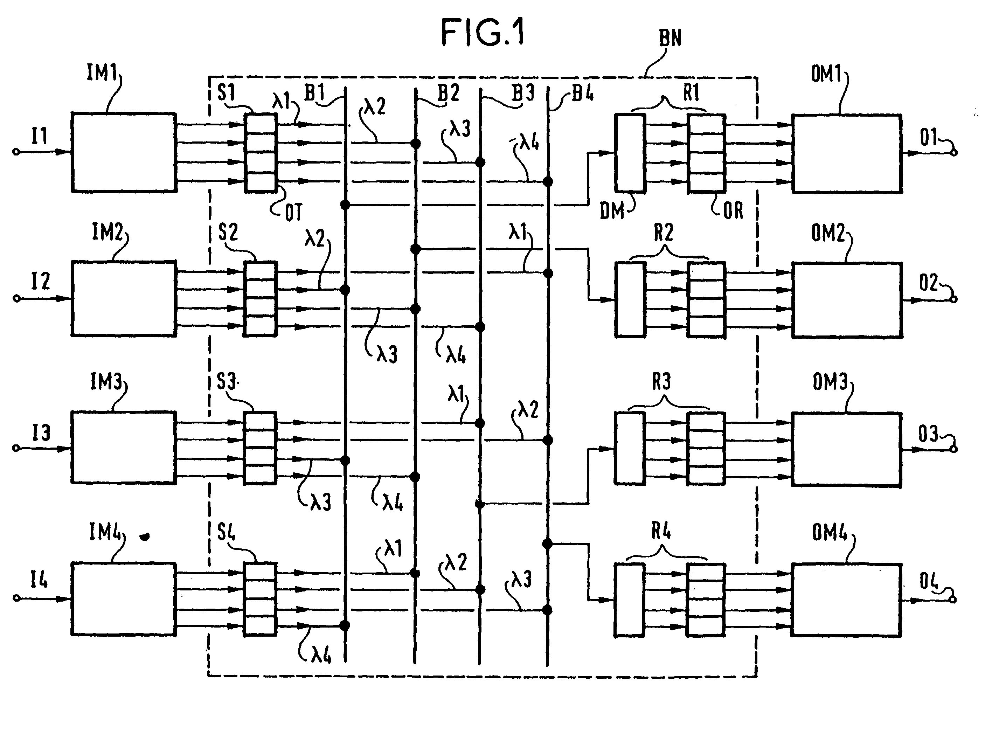

- La figure 1 représente le schéma synoptique d'un exemple de réalisation de la matrice selon l'invention, comportant seulement 4 x 4 accès pour clarifier la figure;
- et la figure 2 représente schématiquement les huit cartes électroniques et les quatre bus optiques constituant cet exemple de réalisation.

Cet exemple de réalisation comporte :

- quatre entrées I1, I2, I3, 14, recevant des cellules avec un rythme de 1244 Mbits/s;
- quatre modules fonctionnels d'entrée IM1, IM2, IM3, IM4, réalisant les fonctions : de resynchronisation des cellules, d'affectation d'étiquettes de routage pour chaque cellule; de commutation et de duplication de cellules pour une éventuelle diffusion; chaque module fonctionnel d'entrée comportant quatre sorties, et chaque cellule pouvant être commutée soit vers une seule de ces sorties, soit vers plusieurs dans le cas d'une cellule à diffuser vers plusieurs destinations;
- un réseau de diffusion BN comportant 4 x 4 entrées et 4 x 4 sorties;
- quatre modules fonctionnels de sorties, OM1, OM2, OM3, OM4, ayant chacun quatre entrées reliées respectivement à quatre sorties du réseau de diffusion BN, et ayant une sortie constituant respectivement une sortie O1, O2, O3, O4 de la matrice; chacun de ces modules fonctionnels de sortie ayant essentiellement pour fonction de constituer un file d'attente pour les cellules destinées à une sortie de la matrice.

Dans cet exemple de réalisation, les modules fonctionnels d'entrées et les modules fonctionnels de sorties sont réalisés en technologie électronique, et le réseau de diffusion comprend des moyens de conversion électrique-optique et des moyens de conversion optique électrique. Plus précisément le réseau de diffusion BN comporte :

- quatre sous-ensembles de conversion électrique-optique S1, S2, S3, S4; comportant chacun quatre émetteurs optiques OT. Les émetteurs optiques de chaque sous-ensemble émettent respectivement quatre porteuses optiques de longueur d'onde λ1, λ2, λ3, λ4 distinctes;

- quatre sous-ensembles de réception optique R1, R2, R3, R4, constitués chacun d'un démultiplexeur DM séparant respectivement sur quatre sorties les porteuses de longueur d'onde λ1, λ2, λ3, λ4, et quatre récepteurs optiques OR reliés respectivement aux 4 sorties du démultiplexeur DM;
- et quatre bus optiques B1, 82, 83, B4 comportant chacun cinq coupleurs optiques, non référencés, représentés par des points noirs.

Les quatre sorties de chaque sous-ensemble d'émission S1, S2, S3, S4 sont reliées respectivement aux quatre bus optiques B1, B2, B3, B4 par quatre coupleurs, mais chaque sous-ensemble optique fournit une longueur d'onde différente à un coupleur donné. Le bus B1 reçoit : la porteuse de longueur d'onde λ1 fournie par la première sortie du sous-ensemble S1, la porteuse de longueur d'onde λ2 fournie par la deuxième sortie du sous-ensemble S2, la porteuse de longueur d'onde λ3 fournie par la troisième sortie du sous-ensemble S3, et la porteuse de longueur d'onde λ4 fournie par la quatrième sortie du sous-ensemble S4.

Le bus B2 reçoit : la porteuse de longueur d'onde λ2 fournie par la deuxième sortie du sous-ensemble S1, la porteuse de longueur d'onde λ3 fournie par la troisième sortie du sous-ensemble S2, la porteuse de longueur d'onde λ4 fournie par la quatrième sortie du sous-ensemble S3, et la porteuse de longueur d'onde λ1 fournie par la première sortie du sous-ensemble S4.

Le bus B3 reçoit la porteuse de longueur d'onde λ3 fournie par la troisième sortie du sous-ensemble S1, la porteuse λ4 fournie par la quatrième sortie du sous-ensemble S2, la porteuse de longueur d'onde λ1 fournie par la première sortie du sous-ensemble S3, et la porteuse de longueur d'onde λ2 fournie par la deuxième sortie du sous-ensemble S4.

Le bus B4 reçoit la porteuse de longueur d'onde λ4 fournie par la quatrième sortie du sous-ensemble S1, la porteuse de longueur d'onde λ1 fournie par la première sortie du sous-ensemble S2, la porteuse de longueur d'onde λ2 fournie par la deuxième sortie du sous-ensemble S3, et la porteuse de longueur d'onde λ3 fournie par la troisième sortie du sous-ensemble S4.

Une entrée du démultiplexeur DM du sous-ensemble R1 est reliée par un coupleur au bus B1. Une entrée du démultiplexeur du sous-ensemble R2 est reliée par un coupleur au bus B2. Une entrée du démultiplexeur du sous-ensemble R3 est reliée par un coupleur au bus B3. Une entrée du démutiplexeur du sous-ensemble R4 est reliée par un coupleur au bus B4. Ainsi chacun des sous-ensembles de réception R1, R2, R3, R4 reçoit un multiplex constitué de quatre porteuses superposées, de longueurs d'onde λ1, λ2, λ3, λ4, sans qu'il n'y ait interférence entre les signaux fournis par les seize sorties des modules fonctionnels d'entrée IM1, IM2, IM3, IM4, et sans qu'il y soit nécessaire de recourir à un protocole complexe pour partager les bus B1, B2, B3, B4.

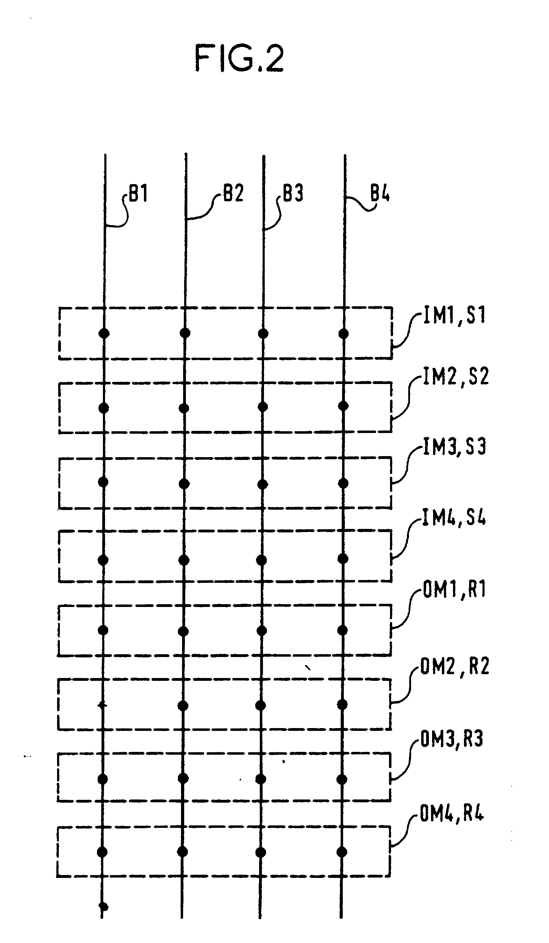

La figure 2 représente schématiquement l'implantation des cartes sur un fond de panier, pour cet exemple de réalisation. Les différents sous-ensembles peuvent être répartis de la manière suivante :

- une carte supporte le module fonctionnel d'entrée IM1 et le sous-ensemble d'émission S1;
- une carte supporte le module fonctionnel d'entrée IM2 et le sous-ensemble d'émission S2;
- une carte supporte le module fonctionnel d'entrée IM3 et le sous-ensemble d'émission S3;
- une carte supporte le module fonctionnel d'entrée IM4 et le sous-ensemble d'émission S4;
- une carte supporte le module fonctionnel de sortie OM1 et le sous-ensemble de réception R1;
- une carte supporte le module fonctionnel de sortie OM2 et le sous-ensemble de réception R2;
- une carte supporte le module fonctionnel de sortie OM3 et le sous-ensemble de réception R3;
- et une carte supporte le module fonctionnel de sortie OM4 et le sous-ensemble de réception R4.

Le fond de panier supporte seulement les quatre bus optiques B1, B2, B3, B4 qui comportent chacun cinq coupleurs intégrés à ces bus. Ces coupleurs sont représentés par des points noirs sur la figure. Chaque coupleur est muni d'un connecteur optique permettant de faire la jonction avec un connecteur optique situé sur une carte.

Les quatre premières cartes comportent quatre connecteurs optiques et les quatre dernières cartes comportent chacune un seul connecteur optique. Cette figure montre l'extrême simplicité des interconnexions ainsi réalisées. Dans le cas d'une matrice à N x N accès, le nombre de bus optiques sur le fond de panier est égal à N, c'est-à-dire ne croît pas de façon démesuré lorsque l'on augmente le nombre N d'accès. Le nombre N d'émetteurs optiques asssociés à chaque module fonctionnel d'entrée est égal à N aussi, ce qui ne pose pas de problèmes insurmontables pour les loger sur une carte. De même, le nombre de récepteurs optiques OR associés à chaque module fonctionnel de sortie est égal à N, ce qui ne cause pas de problèmes pour les loger sur une carte. La principale limitation, en l'état actuel de technologie, est dûe au nombre de longueurs d'onde que l'on peut séparer au moyen d'un même démultiplexeur spectral DM. Actuellement il est possible de séparer sans difficulté seize longueurs d'onde. Il est donc possible de réaliser selon cette structure des matrices à 16 x 16 accès, et à un rythme de 2,5 Gbits/s.

**Revendications**

1. Matrice de commutation , comportant :

- N modules fonctionnels d'entrée (IM1,..., IM4) ayant chacun une entrée et N sorties;
- N modules fonctionnels de sortie (OM1, OM4) ayant chacun N entrées et une sortie;
- un réseau de diffusion (BN) ayant $N^2$ entrées reliées aux $N^2$ sorties des modules fonctionnels d'entrée, et $N^2$ sorties reliées au $N^2$ entrées des modules fonctionnels de sortie, pour diffuser simultanément N signaux fournis par chaque module fonctionnel d'entrée vers chaque module fonctionnel de sortie;

**caractérisé en ce que** le réseau de diffusion (BN) comporte :

- N sous-ensembles d'émission (S1, ..., S4) chacun comportant des moyens pour émettre N porteuses optiques ayant des longueurs d'onde distinctes $\lambda_i$ avec i=1, ..., N, modulées respectivement par N signaux fournis par un module fonctionnel d'entrée;
- N sous-ensembles de réception (R1, ..., R4), chacun comportant des moyens pour recevoir N porteuses optiques ayant respectivement ces longeurs d'onde; extraire N signaux, modulant respectivement ces porteuses; et les fournir à un module fonctionnel de sortie;
- N bus optiques (B1, ..., B4) chacun étant couplé respectivement à une entrée d'un sous-ensemble de réception et étant couplé respectivement à chacun des sous-ensembles d'émission de telle sorte que le j-ième bus, pour j=1 à N, reçoit du k-ième sous-ensemble d'émission les porteuses ayant les longueurs d'onde :

$$\lambda_{1-k(modulo\ N)}, \dots, \lambda_{N-k(modulo\ N)}.$$

2. Matrice selon la revendication 1, **caractérisé en ce que** les modules fonctionnels d'entrées (IM1,..., IM4) et les modules fonctionnels de sortie (OM1,..., OM4) sont réalisés en technologie électronique;

en ce que les sous-ensembles d'émission (S1,...,S4) comportent chacun N émetteurs optiques (OT) commandables respectivement par N signaux électriques fournis respectivement par les N sorties d'un module fonctionnel d'entrée;

et **en ce que** les sous-ensembles de réception (R1,...,R4) comportent chacun un démultiplexeur spectral (DM) ayant N sorties fournissant respectivement N porteuses démultiplexées et ayant les longueurs d'ondes $\lambda_1,...,\lambda_N$; et comportent chacun N récepteurs optiques (OR) couplés respectivement aux sorties du démultiplexeur et fournissant chacun un signal électrique représentant un signal modulant la porteuse fournie à ce récepteur.

**Patentansprüche**

1. Schaltmatrix, aufweisend:

- N Eingangs-Funktionsmodule (IM1, ..., IM4), von denen jedes einen Eingang und N Ausgänge aufweist;
- N Ausgangs-Funktionsmodule (OM1, [...,] OM4), von denen jedes N Eingänge und einen Ausgang aufweist;
- ein Diffusionsnetz bzw. Busnetz (BN), das $N^2$ Eingänge hat, die mit den $N^2$ Ausgängen der Eingangs-Funktionsmodule verbunden sind, und $N^2$ Ausgänge, die mit den $N^2$ Eingängen der Ausgangs-Funktionsmodule verbunden sind, um gleichzeitig N Signale zu verteilen, die von jedem der Eingangs-Funktionsmodule an jedes der Ausgangs-Funktionsmodule geliefert werden;

**dadurch gekennzeichnet, dass** das Diffusionsnetz (BN) folgendes aufweist:

- N Sendebausteine (S1, ..., S4), von denen jeder Vorrichtungen aufweist, um N optische Trägerwellen zu senden, die unterschiedliche Wellenlängen $\lambda_i$ mit i = 1 ... N haben, welche jeweils durch N von einem Eingangs-Funktionsmodul gelieferte Signale moduliert werden;
- N Empfangsbausteine (R1, ..., R4), von denen jeder Vorrichtungen aufweist, um N optische Trägerwellen zu empfangen, die jeweils diese N Wellenlängen haben; um N Signale wiederzugewinnen, die diese Trägerwellen jeweils modulieren; und um sie an ein Ausgangs-Funktionsmodul zu senden;
- N optische Busse (B1, ..., B4), von denen jeder jeweils mit dem Eingang eines Empfangsbausteins gekoppelt ist und jeweils mit jedem der Sendebausteine in der Weise gekoppelt ist, dass der j-te Bus, für j = 1 bis N, vom k-ten Sendebaustein die Trägerwellen empfängt, die folgende Wellenlängen haben:

$$\lambda_{1-k(Modulo\ N)}, \dots, \lambda_{N-k(Modulo\ N)}.$$

2. Matrix nach Anspruch 1, **dadurch gekennzeichnet, dass** die Eingangs-Funktionsmodule (IM1, ..., IM4) und die Ausgangs-Funktionsmodule (OM1, ..., OM4) in elektronischer Technologie ausgeführt sind;

in diesem Fall [**dadurch gekennzeichnet**], dass die Sendebausteine (S1, ..., S4) jeweils N optische Sender (OT) aufweisen, die jeweils durch N elektrische Signale gesteuert werden können, die jeweils von den N Ausgängen eines Eingangs-Funktionsmoduls geliefert werden;

und dadurch, dass die Empfangsbausteine (R1, ..., R4) jeweils einen Spektral-Demultiplexer (DM) aufweisen, der N Ausgänge besitzt, welche jeweils N einem Demultiplexing unterzogene Trägerwellen liefern, welche die Wellenlängen $\lambda_1$, ..., $\lambda_N$ haben; und die jeweils N optische Empfänger (OR) aufweisen, die jeweils mit den Ausgängen des Demultiplexers gekoppelt sind und ein elektrisches Signal liefern, welches ein Signal darstellt, das die an diesen Empfänger gelieferte Trägerwelle moduliert.

from N respective outputs of an input functional module, and **in that** the receive subsystems (R1, ..., R4) each include a spectral demultiplexer (DM) having N outputs providing N respective demultiplexed carriers at wavelength $\lambda_1$, ..., $\lambda_N$ and N optical receivers (OR) coupled to respective outputs of the demultiplexer and each providing an electrical signal representing a signal modulating the carrier supplied to that receiver.

**Claims**

1. Switching matrix including:

   - N input functional modules (IM1, ..., IM4) each having one input and N outputs;
   - N output functional modules (OM1, OM4) each having N inputs and one output;
   - a broadcast network (BN) having $N^2$ inputs connected to the $N^2$ outputs of the input functional modules and $N^2$ outputs connected to the $N^2$ inputs of the output functional modules to broadcast simultaneously N signals from each input functional module to each output functional module;

   **characterized in that** the broadcast network (BN) includes:

   - N send subsystems (S1, ..., S4) each including means for sending N optical carriers at different wavelengths $\lambda_i$ where i = 1, ..., N, respectively modulated by N signals from an input functional module;
   - N receive subsystems (R1, ..., R4) each including means for receiving N optical carriers at said wavelengths, extracting N signals modulating the respective carriers and forwarding them to an output functional module; and
   - N optical buses (B1, ..., B4) each coupled to a respective input of a receive subsystem and each coupled to a respective send subsystem so that the jth bus, for j = 1 through N, receives from the kth send subsystem the carriers at the wavelengths:

   $$\lambda_{1-k(modulo\ N)}, ..., \lambda_{N-k(modulo\ N)}.$$

2. Matrix according to claim 1 **characterized in that** the input functional modules (IM1, ..., IM4) and the output functional modules (OM1, ..., OM4) are electronic, **in that** the send subsystems (S1, ..., S4) each include N optical transmitters (OT) respectively adapted to be controlled by N electrical signals

FIG.1

# FIG.2